# EUROPEAN PATENT SPECIFICATION

(11) **EP 0 868 004 B1**
(45) Date of publication and mention of the grant of the patent: **30.04.2008**
(21) Application number: 98103885.4
(22) Date of filing: 05.03.1998
(51) Int. Cl.: H02J 5/00, H02J 3/36

(54) **A plant for transmitting electric power, including directe voltage regulation**
Anlage zur elektrischen Kraftübertragung, mit Gleichspannungsreglung
Installation de transmission d'énergie électrique, avec commande tension continue

(30) Priority: 24.03.1997 SE 9701064
(43) Date of publication of application: 30.09.1998
(73) Proprietor: ABB AB, 721 83 Västerås (SE)
(72) Inventor: Svensson, Kjell, 771 41 Ludvika (SE); Pålsson, Rolf, 772 04 Saxdalen (SE)
(74) Representative: Kock, Ina

(56) References cited:
- EP-A- 0 047 501
- CA-A- 1 033 808
- US-A- 5 535 113

## Description

### FIELD OF THE INVENTION AND PRIOR ART

The present invention relates to a plant for transmitting electric power according to the preamble of appended claims 1 and 2.

A related plant has recently been known through the thesis "PWM and control of two and three level high power voltage source converters" by Anders Lindberg, Kungliga Tekniska Högskolan, Stockholm, 1995, in which publication such a plant for transmitting electric power through a direct voltage network for High Voltage Direct Current (HVDC) is described. It is pointed out that the invention is not restricted to this application, but for illuminating but accordingly not limiting the invention exactly this application of plants of the type defined above will be discussed hereinafter.

Before the issuance of said thesis plants for transmitting electric power through a direct voltage network for High Voltage Direct Current have been based upon the use of line-commutated CSC (Current Source Converter) converters in stations for power transmission. By the development of IGBTs (Insulated Gate Bipolar Transistor = bipolar transistor having an insulated gate) for high voltage applications and the suitability to connect them in series in valves in converters, since they may easily be turned on and turned off simultaneously, VSC (Voltage Source Converter) converters for forced commutation have now instead become an alternative, and this type of transmission of electric power between a direct voltage network for High Voltage Direct Current being voltage-stiff therethrough and alternating voltage networks connected thereto offers several important advantages with respect to the use of line-commutated CSCs in HVDC, of which it may be mentioned that the consumption of active and reactive power may be controlled independently of each other and there is no risk of commutation failures in the converter and by that no risk of transmission of commutation failures between different HVDC links, which may take place in line-commutated CSC. Furthermore, there is a possibility to feed a weak alternating voltage network or a network without a generation of its own (a dead alternating voltage network). Further advantages are also there.

In a plant of the type discussed above for HVDC with VSC converters the direct voltage of the direct voltage network is determined by one of said stations, above called the first, and it is desired to be able to manage without any fast telecommunication between the station with the voltage-regulating apparatus and the other stations along the direct voltage network, through which a power unbalance could be rapidly corrected, i.e. active power fed into the direct voltage network. Since each power unbalance will result in a change of the direct voltage, which is then corrected by the voltage-regulating station, such a communication possibility will be superfluous. Should the power fed into the network sink as a consequence of limitations in a feeding alternating voltage network connected to the direct voltage network or in the voltage-regulating station, or should the power fed out of the network exceed the available power fed in, the direct voltage of the direct voltage network will sink. The direct voltage will then sink so much that the power fed out is reduced to such a level that power balance is reestablished. Thus, the voltage-regulating station has arrived at the limitation thereof and cannot do anything for maintaining the direct voltage at said determined nominal value. This may finally mean that the direct voltage collapses and parts of the HVDC system is temporarily wiped out.

A plant according to the introduction is known through CA-A-1 033 808, but it does not have any VSC converter. That plant makes it possible to freely change the voltage regulating station, but how and when this takes place for solving the problems defined above is not mentioned in CA-A-1 033 808.

### SUMMARY OF THE INVENTION

The object of the present invention, is to provide a plant, which solves the problems which may arise in temporary differences between active power fed into the direct voltage network and active power fed out therefrom.

This object is according to the invention obtained by providing a plant according to any of claims 1 and 2 enclosed.

It is by this obtained that when a power unbalance occurs a further decreasing of the direct voltage may be avoided and that power balance may be obtained again. This is in the plant according to claim 1 obtained by the fact that the station which was voltage regulating before the overtaking returns to its voltage regulating mode when the reduction was a transient reduction, and this is an advantage, since there are usually good reasons for the selection of a certain station of the plant as voltage-regulating station, for example that this station is connected to the most powerful alternating voltage network.

Furthermore, it is obtained by the plant according to claim 2 that upon a remaining defect the voltage-regulating station is permanently changed, since the regular voltage-regulating station will not come out of the limitation thereof.

"Enabling regulation of either voltage or current of the direct voltage network" should accordingly be interpreted as the regulating apparatus of said stations may be in both these regulation modes, but of course only in one of them at a time. In order to obtain power balance upon said power unbalance any of the other stations than the first voltage-regulating station has to increase the active power flow in towards the direct voltage network or reduce the tapping from the direct voltage network. By the fact that the second station may in the way according to the invention take over the voltage regulation from the first one and thus enter into so-called back-up voltage-regulating mode, when the direct voltage of the direct voltage network sinks below a predetermined value, a further sinking of the direct voltage may be avoided and power balance may be obtained.

According to an embodiment of the invention the apparatus of the station being voltage regulating after a permanent regulating-mode change is adapted to assume said determined nominal value of the direct voltage of the direct voltage network, which was before the regulating-mode change associated with the apparatus being voltage regulating at that time, as reference voltage for its regulation. It is in this way ensured that the new voltage-regulating station receives the same target voltage of the direct voltage network as the previously voltage-regulating station had. It is well possible that said predetermined direct voltage value of said other station was lower than said nominal value, since it is possible that a lower voltage level is normally allowed at the stations being not voltage regulating than at the voltage-regulating station.

According to another preferred embodiment of the invention said comparing member of the first station is adapted to choose said predetermined level as a value being lower than 95% of said nominal value of the direct voltage. This is advantageous, since otherwise a change of voltage-regulating station could occur upon minor variations of the direct voltage, which do not at all require any change of voltage-regulating station. More particularly, it may be mentioned that it has been found to be advantageous that said level is within the interval 85-95% of the nominal value, since it is important to intervene and change the voltage-regulating station when the direct voltage has fallen so much below the nominal value so as to prevent costly disturbances of the plant.

According to another preferred embodiment of the invention the apparatuses are adapted to have a time of about 0.2 seconds as said comparison value. It has been found that this is a suitable time for waiting for a cease of the limitation of the station being voltage regulating before change of voltage-regulating station, before it is decided to make the change permanent.

According to another preferred embodiment of the invention the plant comprises more than two said stations for connection of an alternating voltage network each to the direct voltage network, and more than two of the stations have a regulating apparatus thereof adapted to enable regulation of either voltage or current. It is by this possible to let a suitable station take over the voltage regulation at each separate occurrence of any power unbalance. It is then advantageous that all the stations have their regulating apparatus adapted to enable regulation of either voltage or current. According to a further development of the embodiment having more than two stations the different apparatuses of the different stations are adapted to change to voltage-regulating mode when different predetermined values of the direct voltage at the respective station are underpassed, and according to another further development of the embodiment having more than two stations the regulating apparatuses of the different stations are adapted to permanently change to voltage-regulating mode at different time comparison values. A selectivity may by this both advantageous embodiments be obtain both with respect to level and time of the different stations, i.e. the voltage regulation of the different stations is activated at different levels and become permanent at different times.

According to a still further preferred embodiment of the invention the plant is adapted for transmitting electric power through a direct voltage network for High Voltage Direct Current (HVDC). The advantages of the plant according to the invention are particularly apparent in this preferred application.

Further advantages as well as advantageous features of the invention will appear from the following description and the other dependent claims.

### BRIEF DESCRIPTION OF THE DRAWING

With reference to the appended drawing, below follows a description of a preferred embodiment of the invention cited as an example.

In the drawing:
Fig 1 is a very schematic diagram illustrating the principles of the invention, and
Fig 2 consists of graphs illustrating the progress of some electric quantities with the time on occurrence of a power unbalance and changing of voltage-regulating station of the plant according to Fig 1.

### DETAILED DESCRIPTION OF A PREFERRED EMBODIMENT OF THE INVENTION

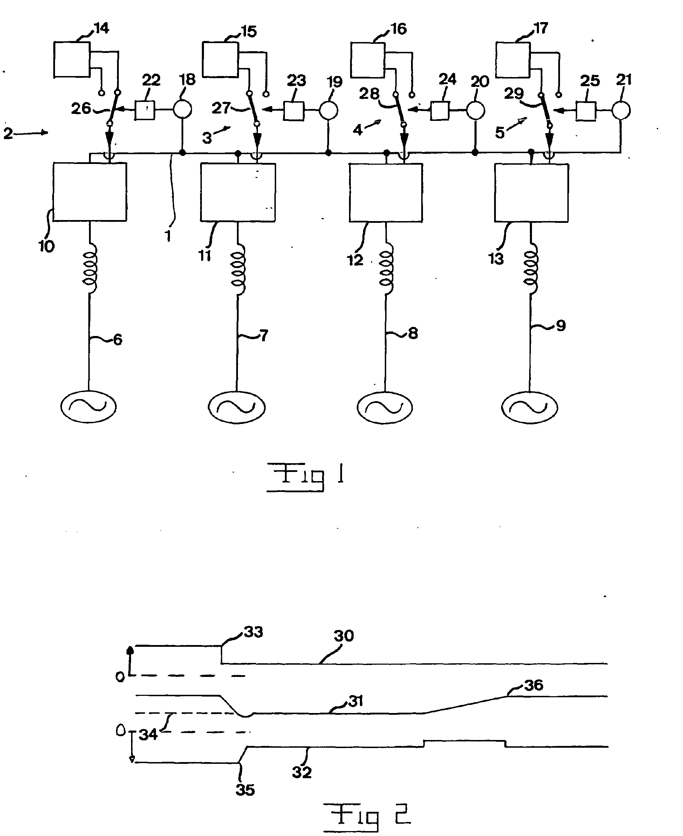

The constitution of a plant for transmitting electric power according to the invention is very schematically and simplified illustrated in Fig 1, in which only the different components having directly anything to do with the function according to the invention have been shown in the drawings so as to facilitate the comprehension of the invention. The plant comprises a direct voltage network 1 for High Voltage Direct Current (HVDC = High Voltage Direct Current) and in the present case four alternating voltage networks 6-9 connected to the direct voltage network through a station 2-5 each, which networks are indicated through an alternating voltage symbol and an inductance. The stations are adapted to perform transmission of electric power between the direct voltage network 1 and the respective alternating voltage network, in which the power may be fed in from an alternating voltage network to the direct voltage network or fed out from the direct voltage network to an alternating voltage network. The alternating voltage networks may accordingly have generators of electric power or only be connected to consumers thereof. The stations comprise each at least one VSC converter 10-13 adapted to convert direct voltage into alternating voltage and conversely. However, it is possible that each station comprises several such converters, but these are in the present case summarized by a single box for each station. It is also possible that the alternating voltage networks have more than one phase, most often three phases, but the phases of the alternating voltage networks are in the figures summarized through one single line. The respective VSC converter comprises in a conventional way so-called valves, which consist of branches of breakers being of turn-on and turn-off type connected in series, preferably in the form of IGBTs, and diodes connected in anti-parallel therewith in a conventional way. A large number of IGBTs may be connected in series in one single valve so as to be turned on and turned off simultaneously so as to function as one single breaker, whereby the voltage across the valve is distributed among de different breakers connected in series. The control of the breakers takes place in a conventional way by pulse width modulation (PWM).

The stations comprise further each an apparatus 14-17 schematically indicated for controlling the respective converter 10-13. To each station is further means 18-21 connected for measuring the direct voltage there, and these means are adapted to send information about the level of the direct voltage to a member 22-25 adapted to compare the direct voltage thus measured at the station with a predetermined value. The respective apparatus 14-17 is connected to the respective converter 10-13 of the station in question through a switching member 26-29 which may be influenced by said comparing member 22-25 between two positions so as to transfer the apparatus between a voltage-regulating and a current-regulating mode.

One of the stations is at a time in a voltage-regulating mode, and it is indicated in Fig 1 that this is the station number 2, in which the switching member 26 has another position than the corresponding switching members 27-29 of the other stations, which accordingly are in the current-regulating mode. The regulation takes place in a conventional way by the way in which the control pulses to the different valves of the converters are designed. The voltage-regulating station 2 attempts to keep the voltage of the direct voltage network at a determined nominal value, but it is possible that a power unbalance occurs in the plant, i.e. active power fed in differs from active power fed out. Should the active power fed in sink as a consequence of limitations of the feeding alternating voltage network or in the voltage-regulating station 2 or should power fed out exceed the available power fed in, the direct voltage of the network 1 will sink. The direct voltage will then sink until the power fed out has been reduced to such a level that power balance is there again. Thus, the voltage-regulating station 2 has arrived to the limitation thereof and cannot do anything for maintaining nominal direct voltage there. Accordingly, it is now required that any of the other stations 3-5 increases the active power flow into towards the direct voltage network or reduces the tapping thereof so as to attain power balance. In order to obtain this there is in each station a back-up voltage-regulating mode, which is intended to enter into force should the direct voltage sink below a predetermined level, preferably about 90% of the desired level and then take over the direct voltage regulation. This is achieved by the fact that the respective comparing members 22-25 compare the voltage measured by the associated voltage measuring means 18-20 with a predetermined value and when this is underpassed send signals to the respective apparatus, more exactly the switching members 26-29 in question, which are to be considered as being part of the apparatus in question, so as to change regulation mode, so that upon an incapability of the voltage-regulating apparatus to maintain the direct voltage close to the nominal value one of the previously current-regulating stations takes over the voltage regulation from the previously voltage-regulating station, which becomes current regulating. Accordingly, if the station 3 takes over the voltage regulation the switching member 27 will turn clockwise, while the switching member 26 turns counter-clockwise. In the respective comparing member 22-25 members adapted to measure the time during which the direct voltage of the station being voltage regulating before said overtaking has a value below said determined value are also included, and the apparatuses are upon a transient, i.e. a rapidly passing reduction of the direct voltage at the station being voltage regulating before the overtaking, adapted to return to the regulation modes they had before this reduction as soon as the reduction has disappeared, which is desired, since there is often a desire to have a certain station as the voltage-regulating station. However, said time measuring members are adapted to ensure that a permanent change of regulation mode between the stations in question takes place should the power unbalance problem remain, i.e. should it still be there after a certain time, for example about 0.2 seconds. If such a permanent change takes place the voltage reference of the new voltage-regulating station is increased to said nominal value, since the voltage reference of this station, with which it is compared in said comparing member, normally is set to a value being lower than said nominal value. Thanks to the possibility to transfer the voltage regulation to a station having not arrived to the limitation thereof power unbalance occurring may be efficiently corrected.

There are for this sake no requirement of any rapid telecommunication between the different stations thanks to the detecting of power unbalance by measuring the level of the direct voltage at the respective station.

It is preferred that only one of the stations is voltage regulating at a time, while the other stations are current regulating, but in a plant having a great number of stations it may not be excluded that more than one station could be voltage regulating at a time. It is preferred that all the stations have the possibility to function both in current-regulating and voltage-regulating mode, so that all the stations being not in the voltage-regulating mode may function as back-up stations, but it is of course completely possible that any or some of the stations only may function in the current-regulating mode.

It is illustrated in Fig 2 how the active power fed out from the voltage-regulating station 2 is developed over the time through the upper line 30, while the lines 31 and 32 show the progress of the direct voltage and the active power fed in at the back-up voltage-regulating station, i.e. the station changing into the voltage-regulating mode, respectively. At the point of time illustrated by the point 33 the voltage-regulating station arrives to the limitation thereof and the active power is reduced there, and the direct voltage 31 sinks. When the direct voltage has sunk below a predetermined level 34, which is preferably 90% of the previous direct voltage, the other station changes to the voltage-regulating mode, which is indicated by the point 35. Accordingly, the active power tapping from the direct voltage network is reduced at this station for obtaining power balance.

The direct voltage has at the point 36 been returned to the nominal value by the new voltage-regulating station.

The invention is of course not in any way restricted to the preferred embodiment described above, but many possibilities to modifications thereof would be apparent to a man skilled in the art without departing from the basic idea of the invention as defined in the appended claims.

Many such alternatives have already been mentioned above in the description, but it is once again repeated that different direct voltage values may be accepted at different stations and that the plant in question has an amount of components not shown in the drawing, such as for example harmonic filters for removing harmonic currents arising in the pulse width modulation.

Although symbols have been shown in Fig 1 for certain members, means or the like, it is not at all necessary that these exist as separate components, but the functions they have to fulfil may very well be ensured by any component also having other tasks and values may for example not be measured directly but calculated from values of any other quantity measured.

## Claims

1. Plant for transmitting electric power comprising a direct voltage network (1) and at least two alternating voltage networks (6-9) connected thereto through a station (2-5) each, said stations being adapted to perform transmitting of electric power between the direct voltage network and the respective alternating voltage network and have each at least one VSC converter (10-13) adapted to convert direct voltage into alternating voltage and conversely and an apparatus (14-17) for controlling the converter, said apparatus in a first station (2) being adapted to control the converter of the station for regulating the direct voltage of the direct voltage network at this station for keeping this at a determined nominal value and the apparatus (3-5) of the other station is adapted to control the converter of that station for regulating the current towards the alternating voltage network at this station, the regulating apparatus (2-5) of the first as well as of the other station being adapted to enable regulation of either the voltage or the current of the direct voltage network, **characterized in that** the plant comprises means (18-21) connected to each station for measuring the direct voltage there, that each station is provided with members (22-25) adapted to compare the direct voltage measured at the station in question with a predetermined value and when this is underpassed send signals to the respective apparatus for changing regulation mode, so that upon incapability of the apparatus being the voltage regulating one at the point of time to keep the direct voltage close to said nominal value the previously current-regulating station takes over the voltage regulation from the previously voltage-regulating station which becomes current regulating, that the respective station comprises members (22-25) adapted to measure the time during which the direct voltage of the station being voltage regulating before said overtaking has a value below said predetermined value, and that said apparatuses (2-5) are adapted to return to the regulating modes they had before this reduction as soon as the reduction has ceased when the reduction was a transient reduction of the direct voltage at the station being voltage regulating before said overtaking.

2. Plant for transmitting electric power comprising a direct voltage network (1) and at least two alternating voltage networks (6-9) connected thereto through a station (2-5) each, said stations being adapted to perform transmitting of electric power between the direct voltage network and the respective alternating voltage network and have each at least one VSC converter (10-13) adapted to convert direct voltage into alternating voltage and conversely and an apparatus (14-17) for controlling the converter, said apparatus in a first station (2) being adapted to control the converter of the station for regulating the direct voltage of the direct voltage network at this station for keeping this at a determined nominal value and the apparatus (3-5) of the other station is adapted to control the converter of that station for regulating the current towards the alternating voltage network at this station, the regulating apparatus (2-5) of the first as well as of the other station being adapted to enable regulation of either the voltage or the current of the direct voltage network, **characterized in that** the plant comprises means (18-21) connected to each station for measuring the direct voltage there, and that each station is provided with members (22-25) adapted to compare the direct voltage measured at the station in question with a predetermined value and when this is underpassed send signals to the respective apparatus for changing regulation mode, so that upon incapability of the apparatus being the voltage regulating one at the point of time to keep the direct voltage close to said nominal value the previously current-regulating station takes over the voltage regulation from the previously voltage-regulating station which becomes current regulating that respective station (2-5) comprises members (22-25) adapted to measure the time that the direct voltage at the station being voltage regulating before said overtaking has a value below said predetermined value, and that the apparatuses are adapted to make the change of regulating mode of the stations permanent when this time exceeds a certain comparison value.

3. A plant according to claim 2, **characterized in that** the apparatus of the station being voltage regulating after permanent regulating-mode change is adapted to assume said determined nominal value of the direct voltage of the direct voltage network, which was before the change of regulating mode associated with the apparatus being voltage regulating at that time, as reference voltage for its regulation.

4. A plant according to claim 1 or 2, **characterized in that** said comparing members (22) of the first station (2) is adapted to choose said predetermined level to a value being lower than 95% of said nominal value of the direct voltage.

5. A plant according to claim 4, **characterized in that** said level is within the interval 85-95% of the nominal value.

6. A plant according to claim 2, **characterized in that** the apparatuses (14-17) are adapted to have a time being longer than 0.15 seconds as said comparison value.

7. A plant according to claim 6, **characterized in that** the apparatuses (14-17) are adapted to have a time of about 0.2 seconds as said comparison value.

8. A plant according to any of claims 1-7, **characterized in that** it comprises more than two said stations (2-5) for connection of an alternating voltage network (6-9) each to said direct voltage network (1), and that more than two of the stations have the regulating apparatus (14-17) thereof adapted to enable regulation of either voltage or current.

9. A plant according to claim 8, **characterized in that** all the stations (2-5) thereof have the regulating apparatus (14-17) thereof adapted to enable regulation of either voltage or current.

10. A plant according to claim 8 or 9, **characterized in that** it is adapted to have the regulating apparatus of one of the stations in voltage-regulating mode and the regulating apparatuses of the other stations in current-regulating mode in each given moment.

11. A plant according to any of claims 8-10, **characterized in that** the different apparatuses (14-17) of the different stations (2-5) are adapted to change to voltage-regulating mode when different predetermined values of the direct voltage of the respective station are underpassed.

12. A plant according to claim 2 and any of claims 8-10, **characterized in that** the regulating apparatuses (14-17) of the different stations (2-5) are adapted to permanently change to voltage-regulating mode at different time comparison values.

13. A plant according to any of claims 1-12, **characterized in that** it is adapted for transmitting electric power through a direct voltage network for High Voltage Direct Current (HVDC).

## Patentansprüche

1. Anlage zum Übertragen von elektrischem Strom, umfassend ein Gleichspannungsnetz (1) und mindestens zwei Wechselspannungsnetze (6-9), die mit diesem durch jeweils eine Station (2-5) verbunden sind, wobei die Stationen dazu angepasst sind, eine Übertragung von elektrischem Strom zwischen dem Gleichspannungsnetz und dem jeweiligen Wechselspannungsnetz durchzuführen, und jeweils mindestens einen VSC-Wandler (10-13) aufweisen, der angepasst ist, Gleichspannung in Wechselspannung und umgekehrt umzuwandeln, und eine Vorrichtung (14-17) zum Steuern des Wandlers, wobei die Vorrichtung in einer ersten Station (2) dazu angepasst ist, den Wandler der Station zur Regelung der Gleichspannung des Gleichspannungsnetzes an dieser Station zum Halten dieser auf einem bestimmten Nominalwert zu steuern, und die Vorrichtung (3-5) der anderen Station dazu angepasst ist, den Wandler der Station zur Regelung des Stroms in Richtung des Wechselspannungsnetzes an dieser Station zu steuern, wobei die Regelvorrichtungen (2-5) der ersten als auch der anderen Stationen dazu angepasst sind, eine Regelung entweder der Spannung oder des Stroms des Gleichspannungsnetzes zu ermöglichen,
**dadurch gekennzeichnet,**
**dass** die Anlage Mittel (18-21) umfasst, die mit jeder Station verbunden sind, um die Gleichspannung dort zu messen,
**dass** jede Station mit Elementen (22-25) versehen ist, die dazu angepasst sind, die an der betreffenden Station gemessene Gleichspannung mit einem vorbestimmten Wert zu vergleichen, und wenn dieser unterschritten wird, Signale an die jeweilige Vorrichtung zum Ändern des Regelungsmodus zu senden, so dass bei einer Unfähigkeit der Vorrichtung, die derzeit die spannungsregelnde Station ist, die Gleichspannung nahe an dem Nominalwert zu halten, die zuvor stromregelnde Station die Spannungsregelung von der zuvor spannungsregelnden Station übernimmt, die dann die stromregelnde wird,
**dass** die jeweilige Station Elemente (22-25) umfasst, die dazu angepasst sind, die Zeit zu messen, während der die Gleichspannung der Station, die vor der Übernahme die spannungsregelnde ist, einen Wert unter dem vorbestimmten Wert aufweist, und
**dass** die Vorrichtungen (2-5) dazu angepasst sind, zu den Regelungsmodi zurückzukehren, die sie vor dieser Verringerung hatten, sobald die Verringerung vorbei ist, wenn die Verringerung eine vorübergehende Verringerung der Gleichspannung an der Station war, die vor der Übernahme die spannungsregelnde war.

2. Anlage zum Übertragen von elektrischem Strom, umfassend ein Gleichspannungsnetz (1) und mindestens zwei Wechselspannungsnetze (6-9), die mit diesem durch jeweils eine Station (2-5) verbunden sind, wobei die Stationen dazu angepasst sind, eine Übertragung von elektrischem Strom zwischen dem Gleichspannungsnetz und dem jeweiligen Wechselspannungsnetz durchzuführen, und jeweils mindestens einen VSC-Wandler (10-13) aufweisen, der angepasst ist, Gleichspannung in Wechselspannung und umgekehrt umzuwandeln, und eine Vorrichtung (14-17) zum Steuern des Wandlers, wobei die Vorrichtung in einer ersten Station (2) dazu angepasst ist, den Wandler der Station zur Regelung der Gleichspannung des Gleichspannungsnetzes an dieser Station zum Halten dieser auf einem bestimmten Nominalwert zu steuern, und die Vorrichtung (3-5) der anderen Station dazu angepasst ist, den Wandler der Station zur Regelung des Stroms in Richtung des Wechselspannungsnetzes an dieser Station zu steuern, wobei die Regelvorrichtungen (2-5) der ersten als auch der anderen Stationen dazu angepasst sind, eine Regelung entweder der Spannung oder des Stroms des Gleichspannungsnetzes zu ermöglichen,
**dadurch gekennzeichnet,**
**dass** die Anlage Mittel (18-21) umfasst, die mit jeder Station verbunden sind, um die Gleichspannung dort zu messen,
**dass** jede Station mit Elementen (22-25) versehen ist, die dazu angepasst sind, die an der betreffenden Station gemessene Gleichspannung mit einem vorbestimmten Wert zu vergleichen, und wenn dieser unterschritten wird, Signale an die jeweilige Vorrichtung zum Ändern des Regelungsmodus zu senden, so dass bei einer Unfähigkeit der Vorrichtung, die derzeit die spannungsregelnde Station ist, die Gleichspannung nahe an dem Nominalwert zu halten, die zuvor stromregelnde Station die Spannungsregelung von der zuvor spannungsregelnden Station übernimmt, die dann die stromregelnde wird,
**dass** die jeweilige Station (2-5) Elemente (22-25) umfasst, die dazu angepasst sind, die Zeit zu messen, während der die Gleichspannung der Station, die vor der Übernahme die spannungsregelnde ist, einen Wert unter dem vorbestimmten Wert aufweist, und
**dass** die Vorrichtungen dazu angepasst sind, die Änderung des Regelungsmodus der Stationen dauerhaft zu machen, wenn diese Zeit einen bestimmten Vergleichswert überschreitet.

3. Anlage nach Anspruch 2, **dadurch gekennzeichnet, dass** die Vorrichtung der Station, die nach einer dauerhaften Änderung des Regelungsmodus spannungsregelnd ist, dazu angepasst ist, den bestimmten Nominalwert der Gleichspannung des Gleichspannungsnetzes, der vor der Änderung des Regelungsmodus mit der Vorrichtung verknüpft war, die zu der Zeit spannungsregelnd war, als Referenzspannung für ihre Regelung zu übernehmen.

4. Vorrichtung nach Anspruch 1 oder 2, **dadurch gekennzeichnet, dass** die Vergleichselemente (22) der ersten Station (2) angepasst sind, als den Wert für das vorbestimmte Niveau weniger als 95% des Nominalwerts der Gleichspannung zu wählen.

5. Anlage nach Anspruch 4, **dadurch gekennzeichnet, dass** das Niveau im Intervall von 85%-95% des Nominalwerts liegt.

6. Anlage nach Anspruch 2, **dadurch gekennzeichnet, dass** die Vorrichtungen (14-17) dazu angepasst sind, eine Zeit von mehr als 0.15 Sekunden als den Vergleichswert zu verwenden.

7. Anlage nach Anspruch 6, **dadurch gekennzeichnet, dass** die Vorrichtungen (14-17) dazu angepasst sind, eine Zeit von etwa 0.2 Sekunden als den Vergleichswert zu verwenden.

8. Anlage nach einem der Ansprüche 1 bis 7, **dadurch gekennzeichnet, dass** sie mehr als zwei der Stationen (2-5) zur Verbindung eines Wechselspannungsnetzes (6-9) jeweils mit dem Gleichspannungsnetz (1) umfasst, und dass mehr als zwei der Stationen die Regelungsvorrichtungen (14-17) aufweisen, die dazu angepasst sind, eine Regelung von entweder Spannung oder Strom zu ermöglichen.

9. Anlage nach Anspruch 8, **dadurch gekennzeichnet, dass** alle ihrer Stationen (2-5) die Regelungsvorrichtungen (14-17) aufweisen, die angepasst sind, eine Regelung von entweder Spannung oder Strom zu ermöglichen.

10. Anlage nach Anspruch 8 oder 9, **dadurch gekennzeichnet, dass** sie angepasst ist, zu jedem Zeitpunkt die Regelungsvorrichtung von einer der Stationen im spannungsregelnden Modus und die Regelungsvorrichtungen der anderen Stationen im stromregelnden Modus zu halten.

11. Anlage nach einem der Ansprüche 8 bis 10, **dadurch gekennzeichnet, dass** die verschiedenen Vorrichtungen (14-17) der verschiedenen Stationen (2-5) dazu angepasst sind, in den spannungsregelnden Modus zu wechseln, wenn verschiedene vorbestimmte Werte der Gleichspannung der jeweiligen Station unterschritten werden.

12. Anlage nach Anspruch 2 und einem der Ansprüche 8 bis 10, **dadurch gekennzeichnet, dass** die Regelungsvorrichtungen (14-17) der verschiedenen Stationen (2-5) dazu angepasst sind, bei unterschiedlichen Zeitvergleichswerten dauerhaft in den spannungsregelnden Modus zu wechseln.

13. Anlage nach einem der Ansprüche 1 bis 12, **dadurch gekennzeichnet, dass** sie zum Übertragen von elektrischem Strom über ein Gleichspannungsnetz für Hochspannungs-Gleichstrom-Übertragung (HVDC) angepasst ist.

## Revendications

1. Installation de transmission d'énergie électrique comprenant un réseau de tension continue (1) et au moins deux réseaux de tension alternative (6 à 9) connectés à celle-ci par l'intermédiaire d'une station (2 à 5) chacune desdites stations étant adaptée à effectuer une transmission d'énergie électrique entre le réseau de tension continue et le réseau de tension alternative respectif et comportant chacune au moins un convertisseur VSC (10 à 13) adapté à convertir une tension continue en tension alternative et inversement et un dispositif (14 à 17) pour commander le convertisseur, ledit dispositif au niveau d'une première station (2) étant adapté à commander le convertisseur de la station pour réguler la tension continue du réseau de tension continue au niveau de cette station pour la maintenir à une valeur nominale déterminée et le dispositif (3 à 5) de l'autre station est adapté à commander le convertisseur de cette station pour réguler le courant vers le réseau de tension alternative au niveau de cette station, les dispositifs de régulation (2 à 5) de la première station ainsi que de l'autre station étant adaptés à permettre la régulation de la tension ou du courant du réseau de tension continue, **caractérisée en ce que** l'installation comprend des moyens (18 à 21) connectés à chaque station pour y mesurer la tension continue, **en ce que** chaque station est munie d'éléments (22 à 25) adaptés à comparer à une valeur prédéterminée la tension continue mesurée au niveau de la station en question et en cas de passage au-dessous de celle-ci, à envoyer des signaux au dispositif respectif pour changer de mode de régulation, de sorte qu'en cas d'incapacité du dispositif à constituer le dispositif régulateur de tension à l'instant du maintien de la tension continue proche de ladite valeur nominale, la station régulatrice de courant précédente prend en charge la régulation de tension à partir de la station de régulation de tension précédente qui devient régulatrice de courant, **en ce que** la station respective comprend des éléments (22 à 25) adaptés à mesurer le temps durant lequel la tension continue de la station qui était régulatrice de tension avant ladite prise en charge a une valeur inférieure à ladite valeur prédéterminée et **en ce que** lesdits dispositifs (2 à 5) sont adaptés à revenir aux modes de régulation existants avant cette réduction dès que la réduction a cessé lorsque la réduction était une réduction transitoire de la tension continue au niveau de la station qui était régulatrice de tension avant ladite prise en charge.

2. Installation de transmission d'énergie électrique comprenant un réseau de tension continue (1) et au moins deux réseaux de tension alternative (6 à 9) connectés à celle-ci par l'intermédiaire d'une station (2 à 5) chacune desdites stations étant adaptée à effectuer une transmission d'énergie électrique entre le réseau de tension continue et le réseau de tension alternative respectif et comportant chacune au moins un convertisseur VSC (10 à 13) adapté à convertir une tension continue en tension alternative et inversement et un dispositif (14 à 17) pour commander le convertisseur, ledit dispositif au niveau d'une première station (2) étant adapté à commander le convertisseur de la station pour réguler la tension continue du réseau de tension continue au niveau de cette station pour la maintenir à une valeur nominale déterminée et le dispositif (3 à 5) de l'autre station est adapté à commander le convertisseur de cette station pour réguler le courant vers le réseau de tension alternative au niveau de cette station, les dispositifs de régulation (2 à 5) de la première station ainsi que de l'autre station étant adaptés à permettre la régulation de la tension ou du courant du réseau de tension continue, **caractérisée en ce que** l'installation comprend des moyens (18 à 21) connectés à chaque station pour y mesurer la tension continue, et **en ce que** chaque station est munie d'éléments (22 à 25) adaptés à comparer à une valeur prédéterminée la tension continue mesurée au niveau de la station en question et en cas de passage au-dessous de celle-ci, à envoyer des signaux au dispositif respectif pour changer de mode de régulation, de sorte qu'en cas d'incapacité du dispositif à constituer le dispositif régulateur de tension à l'instant du maintien de la tension continue proche de ladite valeur nominale, la station régulatrice de courant précédente prend en charge la régulation de tension à partir de la station de régulation de tension précédente qui devient régulatrice de courant, **en ce que** la station respective (2 à 5) comprend des éléments (22 à 25) adaptés à mesurer le temps durant lequel la tension continue de la station qui était régulatrice de tension avant ladite prise en charge a une valeur inférieure à ladite valeur prédéterminée et **en ce que** les dispositifs sont adaptés à effectuer le changement de mode de régulation des stations en permanence lorsque ce temps dépasse une certaine valeur de comparaison.

3. Installation selon la revendication 2, **caractérisée en ce que** le dispositif de la station qui est régulatrice de tension après le changement de mode de régulation permanent est adapté à prendre ladite valeur nominale déterminée de la tension continue du réseau de tension continue, qui existait avant le changement de mode de régulation associé au dispositif qui était régulateur de tension à ce moment, en tant que tension de référence pour sa régulation.

4. Installation selon la revendication 1 ou 2, **caractérisée en ce que** lesdits éléments de comparaison (22) de la première station (2) sont adaptés à choisir ledit niveau prédéterminé à une valeur inférieure à 95% de ladite valeur nominale de la tension continue.

5. Installation selon la revendication 4, **caractérisée en ce que** ledit niveau appartient à l'intervalle compris entre 85 et 95% de la valeur nominale.

6. Installation selon la revendication 2, **caractérisée en ce que** les dispositifs (14 à 17) sont adaptés à avoir un temps plus long que 0,15 seconde en tant que dite valeur de comparaison.

7. Installation selon la revendication 6, **caractérisée en ce que** les dispositifs (14 à 17) sont adaptés à avoir un temps d'environ 0,2 seconde en tant que dite valeur de comparaison.

8. Installation selon l'une quelconque des revendications 1 à 7, **caractérisée en ce qu'**elle comprend plus de deux dites stations (2 à 5) pour connexion d'un réseau de tension alternative (6 à 9) de chacune audit réseau de tension continue (1), et **en ce que** plus de deux des stations ont leurs dispositifs de régulation (14 à 17) adaptés à permettre la régulation, soit de la tension, soit du courant.

9. Installation selon la revendication 8, **caractérisée en ce que** toutes les stations (2 à 5) de celle-ci ont leur dispositif de régulation (14 à 17) adapté à permettre la régulation, soit de la tension, soit du courant.

10. Installation selon la revendication 8 ou 9, **caractérisée en ce qu'**elle est adaptée à avoir le dispositif de régulation de l'une des stations dans le mode de régulation de tension et les dispositifs de régulation des autres stations dans le mode de régulation de courant à chaque moment donné.

11. Installation selon l'une quelconque des revendications 8 à 10, **caractérisée en ce que** les différents dispositifs (14 à 17) des différentes stations (2 à 5) sont adaptés à passer dans le mode de régulation de tension en cas de passage au-dessous de différentes valeurs prédéterminées de la tension continue de la station respective.

12. Installation selon la revendication 2 et selon l'une quelconque des revendications 8 à 10, **caractérisée en ce que** les dispositifs de régulation (14 à 17) des différentes stations (2 à 5) sont adaptés à passer de façon permanente dans le mode de régulation de tension pour des valeurs de comparaison de temps différentes.

13. Installation selon l'une quelconque des revendications 1 à 12, **caractérisée en ce qu'**elle est adaptée à transmettre de l'énergie électrique par l'intermédiaire d'un réseau de tension continue pour courant continu à haute tension (HVDC).
